# EUROPEAN PATENT APPLICATION

(11) **EP 2 658 213 A1**
(43) Date of publication of application: **30.10.2013**
(21) Application number: 12305472.8
(22) Date of filing: 24.04.2012
(51) Int. Cl.: H04L 29/08, H04W 4/00

(54) **Method and system for communicating data**

(71) Applicant: Gemalto SA, 92190 Meudon (FR)
(72) Inventor: Brun, Alain, 13705 LA CIOTAT (FR); Blanc, Stéphane, 13705 LA CIOTAT (FR)

(57) **Abstract**

The invention relates to a method for communicating data.

According to the invention, a first device 12 including or being connected to means for communicating data, the first device storing an identifier relating to a first community, as first community identifier Cid1, the method comprises the following enrolment step. The first device, as first community member, sends to at least one second device 14 the first community identifier 22. And each of the at least one second device, as first community member, stores the first community identifier.

The invention also pertains to a corresponding system.

## Description

### Field of the invention:

The invention relates, in a general manner, to a method for communicating data.

Furthermore, the invention pertains to a system for communicating data.

### State of the art:

Nowadays, a user tends to have more and more (electronic) devices, like a Bluetooth (registered trademark) and/or Wifi (registered trademark) enabled mobile (tele)phone, one or several Bluetooth/Wifi phone accessories, like a headset, a Bluetooth/Wifi TeleVision (or TV) set, a Bluetooth/Wifi enabled Personal Computer (or PC), a Bluetooth/Wifi set top box and so on. Each device offers one or several services.

Such a tendency requires coupling more and more devices to each other, so as to benefit from a service offered by a thus coupled device.

However, the number of the couplings between devices to be carried out is huge and therefore heavy to be managed and time consuming for an end user. For instance, when four devices are to be coupled to each other, six couplings are needed.

Thus, there is a need to reduce the number of the couplings between devices.

### Summary of the invention:

The invention proposes a solution for satisfying the just hereinabove specified need by providing a method for communicating data.

According to the invention, a first device including or being connected to means for communicating data, the first device storing an identifier relating to a first community, as first community identifier, the method comprises the following enrolment step. The first device, as first community member, sends to at least one second device the first community identifier. And each of the at least one second device, as first community member, stores the first community identifier.

The principle of the invention consists in sharing between at least two devices an identifier relating to a community, as community identifier.

The invention solution allows one device to couple to at least one other device while using a community identifier as data stored in a common manner within the thus coupled devices.

The invention solution allows creating a community or network of devices which all store one and the same community identifier.

Thus, contrary to the known solution that is described supra, the invention solution allows avoiding to couple or pair a device which has entered into the community to all the other devices which already belong to the same community.

Contrary to the known solution that is described supra, the invention solution allows exchanging directly between two devices of the same community without needing to involve an additional pairing between two devices of the community.

According to the known solution, if there are a number of n devices to be coupled, then the number of the needed couplings between devices equals to n*(n-1)/2.

The invention solution makes it possible to reduce, in a significant manner, the number of the needed couplings between a number of n devices to only (n-1).

According to a further aspect, the invention is a system for communicating data.

According to the invention, the system comprises a first device and at least one second device, the first device including or being connected to means for communicating data, the first device comprising means for storing an identifier relating to a first community, as first community identifier. The first device, as first community member, is adapted to send to at least one second device the first community identifier. And each of the at least one second device, as first community member, is adapted to store the first community identifier.

The first device may be a terminal or a token.

As terminal, it may be any device including means for processing data, comprising or being connected to means for sending to and/or receiving data from outside, comprising or being connected to a Man Machine Interface (or MMI), as means for presenting data to a user, and comprising or being connected to means for storing data.

The token, as first device, may cooperate with a user terminal, as host device.

As token, it may be any electronic device comprising data processing means, at least one memory (or being connected to one memory(ies)), and one or several Input/Output (or I/O) interfaces. The token is any electronic medium that may have different form factors.

### Brief description of the drawings:

Additional features and advantages of the invention will be more clearly understandable after reading a detailed description of one preferred embodiment of the invention, given as one indicative and non-limitative example, in conjunction with the following drawings:

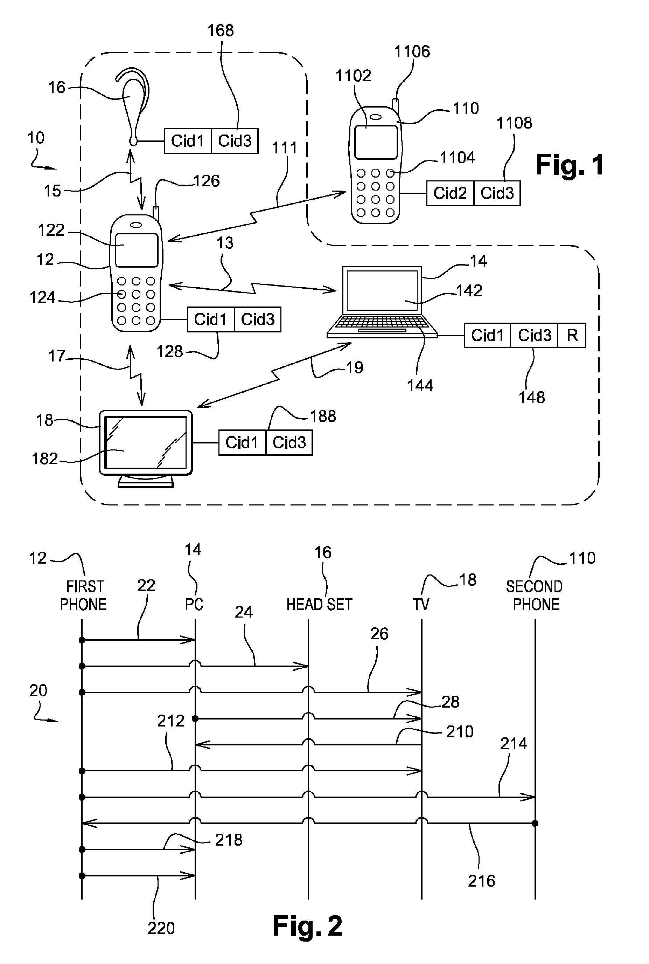

- Figure 1 illustrates, among others, a simplified diagram of one exemplary embodiment of a system for communicating data comprising a mobile phone, as user terminal, the terminal being adapted to transmit to several devices an identifier of a community, according to the invention; and
- Figure 2 represents an example of several message flows between notably the terminal and the devices of the figure 1, notably so as to create a first community, search whether a device belongs to the first community, revoke a member of the first community and create a new community with another terminal of another community.

### Detailed description:

Herein under is considered a case in which the invention method for communicating data is implemented by a mobile phone, as user terminal, which is a device that is used for sharing with other device(s) an identifier relating to a community.

For instance, instead of a mobile phone, the terminal may be a handset, a smart phone, a Personal Digital Assistant (or PDA), a Personal Computer (or PC), a mobile laptop, a portable TeleVision (or TV), a set top box, a netbook, a game console and/or other device(s) able to output data and to provide with one or several services.

Nevertheless, instead of a user terminal, the present invention method for communicating data may be implemented by a token, as a standalone device or a device coupled to a user terminal without departing from the scope of the invention.

Within the present description, a token is a smart object that is intended to communicate with the outside world.

The token includes a chip. The chip comprises a microprocessor, volatile and non volatile memories and at least one I/O interface linked together through a data and control internal bus.

The token may be constituted by any electronic medium, such as a Secure Removable Module (or SRM).

For instance, the token may be constituted by a smart card, a smart dongle of the USB (acronym for "Universal Serial Bus") type, a Secure Digital (or SD) type card, a Multi-Media type Card (or MMC) or a chip to be fixed to a user terminal, as host device, possibly in a removable manner.

Figure 1 shows schematically one exemplary embodiment of an electronic system 10 for communicating data including a first mobile phone 12 and a second mobile phone 110.

Only one system 10 for communicating data, as devices that share at least one identifier relating to a first community, as first community identifier, is represented.

For simplicity reasons, the first mobile phone 12 and the second mobile phone 110 are termed herein after the first phone 12 and the second phone 110 respectively.

The system 10 for communicating data includes four devices, for instance, the first phone 12, as first user terminal and first device, a PC 14, as second device, a headset 16, as third device, and a TV 18, as fourth device.

Four devices 12, 14, 16 and 18, as devices belonging to one and the same community, have been represented.

However, instead of four devices, two, three or more than four devices, as community members, may be comprised within the system 10 for communicating data without departing from the scope of the invention.

Each device, namely the first phone 12, the PC 14, the headset 16 or the TV 18 of the system 10, constitutes one member of a first community.

The first phone 12 includes a display screen 122 and a keyboard 124, as MMI allowing a phone user to interact with the first phone 12.

The first phone 12 comprises an antenna 126 allowing to communicate data, over one or several mobile radio-communication networks (not represented), while using a long range RadioFrequency (or RF) link (not represented).

The first phone 12 includes data processing means, such as one microprocessor (not represented), data storing means 128, such as at least one memory, and at least one I/O interface that are linked all together through a control and data bus (not represented).

The data storing means 128 of the first phone 12 may comprise one or several memories, such as a flash memory(ies) and/or a hard disk drive(s).

The data storing means 128 of the first phone 12 stores an Operating System (or OS) and, preferably, an application that the first phone 12 uses for managing a community, notably to create one or several communities, to enrol a new device as community member, to search whether an interlocutor device does or does not belong to a community managed by the first phone 12, to revoke an interlocutor device as community member and/or other operation relating to a management of the community. The application may be developed in any programming language, like in particular Java.

The first phone 12 may be able to identify and authenticate a user of the first phone 12, in order to allow her/him to access the application. As soon as the user of the first phone 12 has been authenticated by providing a Personal Identity Number (or PIN) or biometric data that is stored within either the first phone 12 or a token coupled to the first phone 12 and verified by the first phone 12 or the token, the user of the first phone 12 accesses the application.

The first phone 12 is preferably used for creating at least a first community by coupling or pairing to at least another device.

To create a first community, the data storing means 128 of the first phone 12 may store an available identifier relating to either the device, like an International Mobile Equipment Identity (or IMEI), or a token coupled to the first phone 12, stored within a memory of the token, as an identifier relating to a first community or first community identifier. Alternately, the data storing means 128 of the first phone 12 may store an algorithm for generating a first community identifier. The algorithm for generating an identifier relating to a first community may be of any type, like, for instance, a random generator. The identifier relating to a first community is preferably unique.

Preferably, the data storing means relating to either the first phone 12 or the token stores, in a secure manner, at least the first community identifier Cid1.

Preferably, the first community identifier Cid1 is a unique number.

After the first phone 12 has possibly generated the first community identifier Cid1, the data storing means 128 of the first phone 12 stores the first community identifier Cid1.

Alternately, instead of the data storing means 128 of the first phone 12, the first phone 12 is coupled to a token (not represented), like a Subscriber Identity Module (or SIM) type or a Universal Integrated Circuit Card (or UICC) type card or a chip soldered to the first phone 12, and writes the first community identifier Cid1 into a token memory.

The first phone 12 constitutes one member of the first community, as first community member.

The first phone 12 may constitute one member of another community.

The first phone 12 includes or is connected to means for communicating data while using preferably a short range RF link, like a link relating to a Near Field Communication (or NFC) type, Bluetooth type or Wifi type technology. Such a list of technology types is not exhaustive. The short range RF link may be related to any technology type that allows the first phone 12 to exchange data with an external device.

Alternatively, instead of using a short range RF link, the first phone 12 includes or is connected to means for communicating data while using a wire link, like a link relating to a USB type or Ethernet type technology

The first phone 12, as first community member, is adapted to send, preferably through a short range RF link, to at least another device at least one identifier relating to a community, at least the first community identifier Cid1.

The first phone 12 may also send to each device that belongs to a community that the first phone 12 has created a list of one or several identifiers relating to all the devices belonging to the community.

The first phone 12 is adapted to send, preferably through a first short range RF link 13, to the PC 14, as second device of the community, at least the first community identifier Cid1.

The first phone 12 is adapted to send, preferably through a second short range RF link 15, to the headset 16, as third device of the community, at least the first community identifier Cid1.

The first phone 12 is adapted to send, preferably through a third short range RF link 17, to the TV 18, as fourth device of the community, at least the first community identifier Cid1.

The PC 14, the headset 16 and the TV 18 become each a first community member.

Thanks to the invention, to create a system with four devices that belong to one and the same first community, only three couplings, i.e. transmissions of the first community identifier Cid1, are needed. Without having coupled to each other for instance the PC 14 and the TV 18, they are coupled and are able to exchange data, preferably through a fourth short range RF link 19, since they both store the first community identifier Cid1.

The first phone 12 may generate a corresponding key Kc for encrypting data, as possibly son key generated from a mother key associated with the first phone 12.

The first phone 12 may also be adapted to send, besides a community identifier, to a device which has to enter into the community, a corresponding key Kc (not represented) for encrypting data that is stored within either the data storing means 128 of the first phone 12 or a memory of a token coupled to the first phone 12. The key Kc for encrypting data is used for encrypting data to be exchanged between two devices, as community members, so as to protect access to the thus exchanged data. The first phone 12 may generate a key Kc for encrypting data by using possibly a corresponding community identifier. The key Kc for encrypting data and the community identifier may be strongly associated, i.e. the key Kc for encrypting data depends on the corresponding community identifier.

Optionally, the first phone 12 is arranged to request an identifier relating to each of the device that the first phone 12 enrols as a member of the community. Once received from a device to which the first phone 12 has transmitted the community identifier, the first phone 12 stores, within its data storing means 128, an identifier relating to each device belonging to the community. Alternatively, instead of storing within the data storing means 128 of the first phone 12, the first phone 12 writes an identifier relating to each device belonging to the community into a memory of a token which the first phone 12 is coupled to. The first phone 12 registers each community member by storing an identifier relating to each device that belongs to the community.

Optionally, the first phone 12 is arranged to send, preferably through a short range RF link, to at least one device, as community member, which has entered into the concerned community an identifier relating to each of the device that the first phone 12 has previously enrolled as a member of the community. Thus, the device of the community knows that it is able to communicate data with another device that has also entered into the community, so as to benefit from a service offered by the other device as another community member.

Optionally, the first phone 12 is arranged to send to at least one device, as community member, which has entered into the concerned community, data as rights for revoking the device as community member. Such rights for revoking the device as community member allows the first phone 12 to erase the corresponding community identifier stored at the device side, i.e. either within the device or a token coupled to the device. The first phone 12 may be able to generate the rights R for revoking the device as community member. The rights for revoking the device as community member may depend on a device identifier and/or a key stored within either the data storing means 128 of the first phone 12 or a memory of a token coupled to the first phone 12. Thus, only when a device belonging to a community, like the first phone 12, sends to another device belonging to the community with the rights for revoking the device as community member, so as to erase or delete a corresponding community identifier stored at a side of the receiving device, namely within either the data storing means of the receiving device or a memory of a token coupled to the receiving device.

The first phone 12 may be adapted to revoke a community member by erasing the corresponding community identifier stored at a side of a device, as community member, i.e. within either the device or a token coupled to the device.

The first phone 12 may be adapted to know whether an interlocutor device does or does not belong to one or several communities to which the first phone 12 belongs while exchanging with the interlocutor device by using preferably a short range radio-frequency link.

The PC 14, as second device, includes or is connected to means for communicating data while using a short range RF link, like a link relating to a NFC type, Bluetooth type or Wifi type technology.

The PC 14 includes a display screen 142 and a keyboard 144, as MMI allowing a PC user to interact with the PC 14.

The PC 14 includes data processing means, such as one microprocessor (not represented), data storing means 148, such as at least one memory, and at least one I/O interface that are linked all together through a control and data bus (not represented).

The data storing means 148 of the PC 14 stores an OS and, preferably, one or several applications, one of which allows the PC 14 to communicate, preferably over a short range RF link, data with another device that belongs to the first community.

The PC 14, as first community member, is adapted to store, within its data storing means 148, the first community identifier Cid1 once received.

Alternately, instead of the data storing means 148 of the PC 14, the PC 14 is coupled to a token (not represented), like a USB type dongle, and writes the first community identifier Cid1 into a token memory.

The PC 14 may be further arranged to send, preferably through the first short range RF link 13, to the first phone 12 an identifier relating to the PC 14.

The PC 14, as first community member, is able to communicate with all the other devices that were previously enrolled as first community members, namely none with the present example, without any additional pairing of the PC 14 with the other previously enrolled device(s).

The headset 16, as third device, includes or is connected to means for communicating data while using a short range RF link, like a link relating to a NFC type, Bluetooth type or Wifi type technology.

The headset 16 includes at least one speaker allowing to ear data received from an interlocutor device further to a conversion of an electric signal into sound waves.

The headset 16 comprises a microphone allowing to provide an interlocutor device with data originating from an environment of the headset 16 further to a conversion of sound waves into an electric signal.

The headset 16 includes data processing means, such as one microprocessor (not represented), data storing means 168, such as at least one memory, and at least one I/O interface that are linked all together through a control and data bus (not represented).

The data storing means 168 of the headset 16 stores preferably one application which allows the headset 16 to communicate, preferably over a short range RF link, data with another device that belongs to the community for which the headset 16 registers a community identifier.

The headset 16, as first community member, is adapted to store, within its data storing means 168, the first community identifier Cid1 once received.

Alternately, instead of the data storing means 168 of the headset 16, the headset 16 is coupled to a token (not represented), like a chip fixed to the headset 16, as host device, and writes the first community identifier Cid1 into a token memory.

The headset 16 may be further arranged to send, preferably through the second short range RF link 15, to the first phone 12 an identifier relating to the headset 16.

The headset 16 is able to communicate with all the other device(s) that were previously enrolled as first community members, namely the PC 14, without any additional pairing of the headset 16 with the other previously enrolled device(s).

The TV 18, as fourth device, includes or is connected to means for communicating data while using a short range RF link, like a link relating to a NFC type, Bluetooth type or Wifi type technology.

The TV 18 includes a display screen 182 that may be touch-sensitive.

The TV 18 includes at least one loudspeaker allowing to ear data received from an interlocutor device further to a conversion of an electric signal into sound waves.

The TV 18 includes data processing means, such as one microprocessor (not represented), data storing means 188, such as at least one memory, and at least one I/O interface that are linked all together through a control and data bus (not represented).

The data storing means 188 of the TV 18 stores preferably one application which allows the TV 18 to communicate, preferably over a short range RF link, data with another device that belongs to the community for which the TV 18 registers a community identifier.

The TV 18, as first community member, is adapted to store, within its data storing means 188, the first community identifier Cid1 once received.

Alternately, instead of the data storing means 188 of the TV 18, the TV 18 is coupled to a token (not represented), like a chip fixed to the TV 18, as host device, and writes the first community identifier Cid1 into a token memory.

The TV 18 may be further arranged to send, preferably through the third short range RF link 17, to the first phone 12 an identifier relating to the TV 18.

The TV 18 is able to communicate with all the other devices that were previously enrolled as first community members, namely the PC 14 and the headset 16, without any additional pairing of the TV 18 with the other previously enrolled devices. For instance, the TV 18 may thus benefit from an application supported by the PC 14 while addressing this latter through the short range RF link 19.

All the devices 12, 14, 16 and 18 of the system 10 that are tied to the same first community are able to communicate between each other without any additional coupling. The devices 12, 14, 16 and 18 of the system 10 share a community identifier, namely the first community identifier Cid1. Such a community allows any device, as community member, to access a service offered by another device of the community. The sharing of the community identifier eases an identification of devices by referring to the community identifier. The sharing of the community identifier also eases a sharing of services between the devices of the same community. The sharing of the community identifier allows securing access to the services available and offered by the devices of the community.

The second phone 110, as fifth device, includes a display screen 1102 and a keyboard 1104, as MMI allowing a phone user to interact with the second phone 110.

The second phone 110 comprises an antenna 1106 allowing to communicate data, over one or several mobile radio-communication networks (not represented), while using a long range RF link (not represented).

The second phone 110 comprises data processing means, such as one microprocessor (not represented), data storing means 1108, such as at least one memory, and at least one I/O interface that are linked all together through a control and data bus (not represented).

The data storing means 1108 of the second phone 110 may comprise one or several memories.

The data storing means 1108 of the second phone 110 stores an OS and, preferably, an application that the second phone 110 uses notably for creating several communities.

The second phone 110 is preferably used for creating at least a second community by coupling or pairing to at least another device (not represented).

The second community identifier Cid2 may be an identifier relating to a token (not represented) coupled to the second phone 110.

The second phone 110 is preferably used for creating a third community by coupling or pairing to at least another device.

To create a third community, the data storing means 1108 of the second phone 110 may store an algorithm for generating an identifier relating to a third community, as third community identifier. The algorithm for generating an identifier relating to a third community may be a concatenation of two community identifiers, a first one which the second phone 110 has created and a second one which another device has created or conversely. According to such an example, the second phone 110 retrieves from an interlocutor device the community identifier the mother of which is the interlocutor device, as creator or generator of the concerned community identifier. The order of the concatenation may be relevant with respect to the level of authority for a management of the created third community, where the identifier, namely either the second community identifier or the first community identifier, that is present at first in a corresponding result of the concatenation has the authority for instance to revoke a third community member. Thus, only one user terminal, namely either the second phone 110 or the first phone 12, is the master while the other user terminal, namely either the first phone 12 or the second phone 110 respectively, is the slave.

Alternately, an interlocutor device, like the first phone 12, as originator of a third community identifier Cid3, has possibly generated and sends to the second phone 110 the third community identifier Cid3.

The third community identifier Cid3 may depend on the second community identifier Cid2 and/or another community identifier, like the first community identifier Cid1, retrieved from an interlocutor device belonging to a corresponding community.

The data storing means 1108 of the second phone 110 stores the second community identifier Cid2 and the third community identifier Cid3.

Alternately, instead of the data storing means 1108 of the second phone 110, the second phone 110 is coupled to a token (not represented), like a SIM type or a UICC type card or a chip soldered to the second phone 110, and writes the second community identifier Cid2 and the third community identifier Cid3 into a token memory.

The second phone 110 constitutes one member of the second and one member of the third community, as second and third community member.

The second phone 110 includes or is connected to means for communicating data while using a short range RF link.

Only the second phone 110 of a second system for communicating data relating to a second community is represented.

The second phone 110, as third community member, may be adapted to send to at least another device at least one identifier relating to a third community, at least the third community identifier Cid3.

The second phone 110 may also send to each device that belongs to a community that the second phone 110 has created a list of one or several identifiers relating to all the devices belonging to the community.

The second phone 110, as first member of a third community, may be adapted to send, preferably through a fifth short range RF link 111, to the first phone 12, as second member of a third community, the third community identifier Cid3.

Optionally, prior to a sending of the third community identifier Cid3 from the second phone 110 to another device, the second phone 110 may be arranged to request an identifier relating to a community which the interlocutor device belongs to.

Optionally, the interlocutor device of the second phone 110, as device from which originates another community identifier, like the first phone 12, is arranged to send to each device that belongs to the concerned community, like the first community, the third community identifier Cid3. The interlocutor device of the second phone 110 becomes thus a third community member.

Optionally, only the first phone 12 may be adapted to revoke a third community member that is also a first community member by erasing the corresponding third community identifier stored at a side of a device, as first and third community member, i.e. within either the device or a token coupled to the device.

The first phone 12 may be adapted to know whether an interlocutor device does or does not belong to one or several communities to which the first phone 12 also belongs while exchanging with the interlocutor device by using preferably a short range radio-frequency link.

Figure 2 depicts an exemplary embodiment of the invention method 20 for communicating data between the five devices 12, 14, 16, 18 and 110 for different scenarios.

It is assumed that the first phone 12 is the sole device that is used for addressing other devices so as to enter into a first community or exit out of the first community.

However, instead of one device, several devices of the system 10 may be used for transmitting a community identifier without departing from the scope of the invention.

Firstly, a user of the first phone 12 selects the application relating to a management of a community by using its MMI.

The first phone 12 runs the selected application.

Alternately, instead of being supported by the first phone 12, the application relating to a management of a community is supported and run by a token coupled to the first phone 12.

The user of the first phone 12 creates at first her/his community by propagating to one or several devices a first community identifier Cid1 and possibly a corresponding key for encrypting data.

Prior to a propagation of the first community identifier Cid1 to each device, the first phone 12 is preferably able to authenticate its user.

Then, the first phone 12, as first community member, sends to the PC 14 a first message 22 including a first community identifier Cid1 and possibly a corresponding key for encrypting data.

Such a first community identifier Cid1, once transmitted to another interlocutor device, allows integrating the interlocutor device into a community relating to the first phone 12.

The PC 14, as first community member, stores the received first community identifier Cid1 and possibly a corresponding key for encrypting data.

The first message 22 may include a request for retrieving an identifier relating to the PC 14. The PC 14 sends back to the first phone 12, as response (not represented) to the received request, when present, an identifier relating to the PC 14.

The first phone 12 may also send to the PC 14 within the first message 22 or another message (not represented) rights R for revoking the PC 14 as first community member. The PC 14 stores the received rights R for revoking the PC 14 as first community member. The rights R for revoking the PC 14 as first community member allows the first phone 12 to erase the first community identifier Cid1 stored within either the PC 14 or a token coupled to the PC 14.

The first phone 12 sends to the headset 16 a second message 24 including a first community identifier Cid1 and possibly a corresponding key for encrypting data.

The headset 16, as first community member, stores the received first community identifier Cid1 and possibly a corresponding key for encrypting data.

The second message 24 may include a request for retrieving an identifier relating to the headset 16. The headset 16 sends back to the first phone 12, as response (not represented) to the received request, when present, an identifier relating to the headset 16.

The headset 16 integrating the first community is able to benefit from a service of another first community member even if the headset 16 has not been previously coupled to the concerned first community member. The headset 16 is thus able to communicate with the PC 14 while referring to the first community identifier Cid1.

The first phone 12 may also send to the headset 16 within the second message 24 or another message (not represented) rights for revoking the headset 16 as first community member. The rights for revoking the PC 14 as first community member allows the first phone 12 to erase the first community identifier Cid1 stored within either the headset 16 or a token coupled to the headset 16.

The first phone 12 sends to the TV 18 a third message 26 including a first community identifier Cid1 and possibly a corresponding key for encrypting data.

The TV 18, as first community member, stores the received first community identifier Cid1 and possibly a corresponding key for encrypting data.

The third message 26 may include a request for retrieving an identifier relating to the TV 18. The TV 18 sends back to the first phone 12, as response (not represented) to the received request, when present, an identifier relating to the TV 18.

Consequently, the first 12, second 14, third 16 and fourth 18 devices, as members of the first community benefit, in a user friendly manner, from one or several services supported by any other first community member.

The first phone 12 may use any communication technology be it either wire or wireless, like either a short range RF technology of the type Bluetooth, NFC, Wifi, Wimax, Zigbee or a long range RF technology of the type 3^{rd} Generation, 4^{th} Generation, Long Term Evolution (or LTE) or the like, so as to communicate with another device.

The TV 18 integrating the first community is able to benefit from a service of another first community member even if the TV 18 has not been previously coupled to the concerned first community member. The TV 18, as first community member, is thus able to communicate with the PC 14 and/or the headset 16, as other first community member(s), while referring to the first community identifier Cid1.

The first phone 12 may also send to the TV 18 within the third message 26 or another message (not represented) rights for revoking the TV 18 as first community member. The rights for revoking the TV 18 as first community member allows the first phone 12 to erase the first community identifier Cid1 stored within either the TV 18 or a token coupled to the TV 18.

Optionally, within the first 22, second 24 or third 26 message, the first phone 12 includes a list of an identifier relating to each device that belongs to the same first community. Thus, each new first community member knows the existence of other community member(s).

The PC 14, as first community member, may search whether a device, like the TV 18, which the PC 14 desires to communicate with does or does not belong to the same community.

The PC 14, as first community member, sends to the TV 18 a challenge 28, i.e. a number.

The TV 18, when it belongs to the first community, stores an algorithm for generating a first result by using, as input, a challenge and the first community identifier Cid1.

Assuming that the TV 18 has been enrolled as first community member, the TV 18 generates a first result by using the algorithm for generating a first result, the first community identifier Cid1 and the received challenge.

Once generated, the TV 18 sends to the PC 14 the first result 210.

The PC 14 that belongs to the first community also stores the algorithm for generating a second result by using, as input, a challenge and the first community identifier Cid1. The second result also depends on the first community identifier Cid1.

Once generated, the PC 14 compares the second result to the first result.

If the second result does not match the first result, then the PC 14 identifies that the TV 18, as its interlocutor, does not store the first community identifier and does not belong to the first community. The PC 14 does not further communicate with the TV 18, as first community member, since the interlocutor device of the PC 14 does not share the first community identifier Cid1.

Otherwise, i.e. if the second result matches the first result, the PC 14 identifies that the TV 18 stores the first community identifier Cid1 and also belongs to the first community. The PC 14 does further communicate with the TV 18, as first community member, while using possibly a corresponding key for encrypting data so as to exchange in a confidential manner.

To revoke the TV 18 as first community member, the first phone 12 may send to the TV 18 (or a token coupled to the TV 18) a fourth message 212 including rights for revoking the TV 18 as first community member.

The TV 18 (or the token coupled to the TV 18) analyses whether the rights for revoking the TV 18 as first community member stored within the TV 18 (or the token coupled to the TV 18) matches data submitted by an external device.

If the data submitted by an external device does not match the rights for revoking the TV 18, then the TV 18 (or a token coupled to the TV 18) refuses to erase the first community identifier Cid1 stored within the TV 18 (or a token memory). The TV 18 therefore remains a first community member.

Otherwise, i.e. if the data submitted by an external device does match the rights for revoking the TV 18, the TV 18 authorizes to erase the first community identifier Cid1 stored within the TV 18. Once the first community identifier Cid1 is erased, the TV 18 may send to the first phone 12 a message (not represented) for confirming that the first community identifier Cid1 has been erased. The TV 18 does no more belong to the first community. The TV 18 is no more authorized to communicate with any first community member be it either the first phone 12, the PC 14 or the headset 16 while referring to the first community identifier Cid1.

It is assumed that the second phone 110, as fifth device, belongs to a second community and stores, as such, an identifier relating to a second community, as second community identifier Cid2.

To create a new community between two masters of different communities or systems, one of the two masters, like the second phone 110, may take the control for enrolling the other as member of the created community. To create the new community, the second phone 110 (or a token coupled to the second phone 110) may generate an identifier relating to a third community, as third community identifier Cid3. The third community identifier Cid3 may depend on at least one of the first community identifier Cid1 and the second community identifier Cid2.

It is assumed herein infra that the third community identifier Cid3 depends on both the first community identifier Cid1 and the second community identifier Cid2.

The first phone 12 sends to the second phone 110 a fifth message 214 including the first community identifier Cid1.

The second phone 110 determines a third community identifier Cid3 by using a predetermined algorithm for generating a community identifier and, as inputs, the received first community identifier Cid1 and the stored second community identifier Cid2.

Once determined, the second phone 110 sends to the first phone 12 a sixth message 216 including the generated third community identifier Cid3 and possibly corresponding rights for revoking the first phone 12, as third community member.

Alternately, instead of the second phone 110, the first phone 12 is the master for enrolling the second phone 110 as member of the created community. According to such an embodiment, the directions of the two last messages 214 and 216 that are exchanged between the first 12 and second 110 phones are reversed. More exactly, the second phone 110 sends to the first phone 12 a message including the second community identifier Cid2 and the first phone 12 sends to the second phone 110 a message including a generated third community identifier Cid3 and possibly corresponding rights for revoking the second phone 110, as third community member.

Thus, two phones 12 and 110, as user terminals, are able to exchange services between each other.

As soon as the first phone 12 is enrolled as third community member, the first phone 12 may propagate to at least one device, like the second device 14 and/or the third device 16, as first community member(s), so as to enrol its first community member(s) as third community member(s).

For instance, the first phone 12 sends to the PC 14 a seventh message 218 including the third community identifier Cid3 and possibly rights for revoking the PC 14 as third community member. The rights for revoking the PC 14 as third community member allows the first phone 12 to erase the third community identifier Cid3 stored within either the PC 14 or a token coupled to the PC 14.

The first phone 12 sends to the PC 14 an eighth message 220 including rights for revoking the PC 14 as third community member.

The PC 14 (or the token coupled to the PC 14) analyses whether the rights for revoking the PC 14 as third community member stored within the PC 14 (or the token coupled to the PC 14) matches data submitted by an external device.

If the data submitted by an external device does not match the rights for revoking the PC 14, then the PC 14 (or a token coupled to the PC 14) refuses to erase the third community identifier Cid3 stored within the PC 14 (or a token memory). The PC 14 therefore remains a first community member.

Otherwise, i.e. if the data submitted by an external device does match the rights for revoking the PC 14, the PC 14 authorizes to erase the third community identifier Cid3 stored within the PC 14. Once the third community identifier Cid3 is erased, the PC 14 may send to the first phone 12 a message (not represented) for confirming that the PC 14 erases the third community identifier Cid3 stored within its memory 148. The PC 14 does no more belong to the first community. The PC 14 is no more authorized to communicate with any third community member be it either the first phone 12 or the headset 16 while referring to the third community identifier Cid3.

The embodiment for different scenarios that has just been described is not intended to limit the scope of the concerned invention. Other embodiments may be given. As another embodiment example, instead of exchanging with the first phone 12, a token coupled to the first phone 12 exchanges, over a contactless link, such as an NFC type link, with a local device, like the second, third or fourth device, so as to integrate the local device into a community, revoke the local device from the community and/or manage the local device, as a member of the community into which the token has integrated the local device.

## Claims

1. A method (20) for communicating data,
**characterized in that**, a first device (12) including or being connected to means for communicating data, the first device storing an identifier relating to a first community, as first community identifier (Cid1), the method comprises the following enrolment step:
- the first device, as first community member, sends to at least one second device (14) the first community identifier (22); and
- each of the at least one second device, as first community member, stores the first community identifier.

2. Method according to claim 1, wherein the method further includes a first community member registration step in which each of the at least one second device sends to the first device an identifier relating to the second device, as second device identifier, and the first device stores each of the at least one second device identifier, as first community member.

3. Method according to claim 1 or 2, wherein the method further includes a community member revoking authorization step in which the first device sends to at least the second device rights (22) for revoking the second device as first community member, the rights for revoking the second device allowing the first device to erase the first community identifier stored within the second device.

4. Method according to claim 3, wherein the method further includes a revoking rights generation step in which the first device generates the rights for revoking the second device as first community member, the rights for revoking the second device depending on a second device identifier and/or a key stored within the first device.

5. Method according to any previous claim, wherein the method further includes the following enrolment step:
- the first device sends to at least one third device (16) the first community identifier (24), and
- the third device, as first community member, stores the first community identifier.

6. Method according to claim 5, wherein the method further includes a first community member searching step in which:
- the second device sends to at least one fourth device (18) a challenge (28),
- the fourth device generates a first result depending on the received challenge,
- the fourth device sends the first result (210) to the second device,
- the second device generates a second result depending on the sent challenge, the second result depending on the first community identifier,
- the second device compares the second result to the first result,
- only if the second result matches the first result, then the second device identifies that the fourth device stores the first community identifier.

7. Method according to any of claims 1 to 6, wherein the method further includes a first community member revocation step in which the first device erases the first community identifier stored within the second device.

8. Method according to any of claims 1 to 7, wherein, a fifth device (110) including or being connected to means for communicating data, the fifth device storing an identifier relating to a second community, as second community identifier (Cid2), the method comprises at least some of the following steps:
- at least one of the first device and the fifth device sends, to the other of the first device and the fifth device respectively, an identifier (216) relating to a third community, as third community identifier (Cid3), the third community identifier depending on at least one of the first community identifier and the second community identifier.

9. Method according to claim 8, wherein the method further includes a enrolment step in which the first device sends to each of the at least one second device, as first community member, the third community identifier (218), and each of the at least one second device, as third community member, stores the third community identifier, and possibly the method further includes a third community member revocation step in which the first device erases the third community identifier stored within each of the at least one second device, as third community member.

10. A system (10) for communicating data,
**characterized in that** the system comprises a first device (12) and at least one second device (14, 16 and 18), the first device including or being connected to means for communicating data, the first device comprising means (128) for storing an identifier relating to a first community, as first community identifier (Cid1),
**in that** the first device, as first community member, is adapted to send to at least one second device the first community identifier (22, 24, 26); and
**in that** each of the at least one second device, as first community member, is adapted to store the first community identifier.
